Europäisches Patentamt

European Patent Office

Office européen des brevets

(11) Veröffentlichungsnummer: **0 435 121 A2**

## (12) EUROPÄISCHE PATENTANMELDUNG

(21) Anmeldenummer: 90124324.6

(22) Anmeldetag: 15.12.90

(51) Int. Cl.⁵: **G02C 5/20**

(30) Priorität: 28.12.89 DE 8915221 U

(43) Veröffentlichungstag der Anmeldung:
03.07.91 Patentblatt 91/27

(84) Benannte Vertragsstaaten:
DE FR GB IT

(71) Anmelder: **Marwitz & Hauser GmbH, Stuttgart**
**Dornhaldenstrasse 5**
**W-7000 Stuttgart(DE)**

(72) Erfinder: **Gutbrod, Heinz**
**Dobelstrasse 21**
**W-7250 Leonberg 5(DE)**
Erfinder: **Nowottny, Norbert**
**Eltingerstrasse 9**
**W-7250 Leonberg 1(DE)**

(54) **Längenverstellbarer Brillenbügel.**

(57) Der längenverstellbare Brillenbügel besteht aus mindestens zwei Bügelteilen, von denen eines in einer Hülse axial verschiebbar und in verschiedenen Stellungen feststellbar ist. Dazu ist ein Bügelteil zumindest in einem Abschnitt als Hülse ausgebildet. Diesel Hülse besitzt einen axial verlaufenden Schlitz für einen axial in zwei Positionen verstellbaren Arretierungsschieber. In der Hülse befindet sich ein mit einem Rastkörper versehenes Federelement. Ein zweiter Bügelteil ist so ausgebildet, daß er in das erste Bügelteil eingeschoben werden kann. Dieser zweite Bügelteil besitzt an seinem einschiebbaren Ende axial angeordnete, zum federnden Einrasten des Rastkörpers ausgebildete Rastausnehmungen.

Der Arretierungsschieber deckt den Schlitz zumindest im Arretierungszustand vollständig ab. Mit seinem Druckkörper arretiert er den Rastkörper in einer zugeordneten Rastausnehmung in einer seiner beiden möglichen Positionen, während er in seiner zweiten Position der Bewegung der beiden Bügelteile zueinander keinen Widerstand entgegensetzt.

Mit dem Brillenbügel wird eine hohe Benutzerfreundlichkeit erzielt, da der Brillenbügel sowohl einen Austausch des einzuschiebenden Bügelteils, als auch eine Längenverstellung und darüber hinaus außerdem eine Arretierung der beiden Bügelteile zueinander mit relativ wenigen Bauteilen in einer schnelllen, einfachen und leichten Weise ermöglicht.

Fig.2

Xerox Copy Centre

## LÄNGENVERSTELLBARER BRILLENBÜGEL

Gegenstand der Neuerung ist ein längenverstellbarer Brillenbügel, bestehend aus mindestens zwei Bügelteilen, von denen eines in einer Hülse axial verschiebbar und in verschiedenen Stellungen feststellbar ist.

Längenverstellbare Brillenbügel sind seit langem bekannt. So ist aus der DE-PS 30 47 263 ein längenverstellbarer Brillenbügel bekannt, bei dem ein außenliegendes Federelement im Bereich der Gelenkscheibe klemmend befestigt ist. Dieses Federelement verschließt zum großen Teil eine längliche Aussparung eines hülsenförmigen Bügelteiles. In dieses Bügelteil wird ein Bügelteil mit rechteckförmigem Querschnitt eingeschoben. Mehrere punktförmige Erhebungen des Federelementes weisen zum Inneren des hülsenförmigen Bügelteils und rasten gleichzeitig in mehrere Rasterausnehmungen des rechteckförmigen Bügelteils. Nachteilig an diesem Brillenbügel ist, daß keine lösbare Arretierung möglich ist, daß im Bereich der Längsspalte zwischen Federelement und hülsenförmigen Bügelteil eine Verschmutzung erfolgt und daß die Gefahr besteht, daß Haare sich zwischen Federelement und eingeschobenem Bügelteil verfangen können.

Aus der DE-PS 21 10 225 ist ein Brillenbügel verstellbarer Länge bekannt, bei dem Rasteröffnungen im hülsenförmigen Bügelteil vorhanden sind. In diese Öffnungen greift das federnd gelagerte Element des einzuschiebenden Bügelteils. Auch hier ist keine Arretierung möglich und im Laufe der Zeit erfolgt eine Verschmutzung.

Eine Arretierung erfolgt bei dem DE-Gbm 11 12 925 und dem DE-Gbm 88 05 603, wobei allerdings das arretierende Element als Steckelement ausgebildet ist und demnach vom Brillenbügel abgenommen werden muß.

Aufgabe der Neuerung ist es, einen auswechselbaren, arretierbaren, längenverstellbaren Brillenbügel zu erhalten, bei welchem für Haare keine Einklemmgefahr besteht und auch im Laufe der Zeit keine Verschmutzung eintritt.

Diese Aufgabe wird neuerungsgemäß durch eine Ausbildung des Brillenbügels nach dem kennzeichnenden Teil des Anspruchs 1 gelöst.

Der neuerungsgemäße Brillenbügel zeichnet sich durch seine hohe Benutzerfreundlichkeit aus. Durch die hülsenförmige Form des Arretierungsschiebers ist seine Bewegungsfreiheit auf eine axiale Bewegung begrenzt. Selbst diese axiale Bewegung wird durch den an ihm angebrachten Druckkörper begrenzt, so daß der Arretierungsschieber nie verloren gehen kann. Der Arretierungsschieber ist genügend lang, so daß Schlitze in Arretierposition abgedeckt sind, wodurch er außerdem gut handhabbar wird. Durch die Länge und das Material des Federelementes wird die Federwirkung festgelegt, mit welcher der Rastkörper in eine Rastausnehmung auf den aufzuschiebenden Bügelteil gedrückt wird. Diese Kraft braucht nicht sehr groß zu sein, da bei der Verschiebung des einzuschiebenden Bügelteils lediglich die Einrastrung bemerkbar sein soll. Die Sicherstellung gegen eine nicht gewollte Verschiebung erfolgt dann durch den Arretierungsschieber. Damit erhält man eine leichte Verschiebung gepaart mit einer sicheren Festlegung während der Benutzung. Da das Federelement sich im Gebrauchszustand in seiner entspannten Grundstellung befindet, ist eine störungsfreie, lange Lebensdauer sichergestellt. Zur Störungsfreiheit trägt auch bei, daß der Brillenbügel nur aus wenigen Teilen aufgebaut ist, welche zudem leicht demontiert und montiert werden können. Durch die abgeschlossene Bauweise, bei der keine sichtbaren, offenen Löcher oder Schlitze vorhanden sind, besteht keine Verschmutzungsgefahr oder Einklemmgefahr für die Haare. Diese Konstruktion erlaubt desweiteren einen einfachen, schnellen und leichten Austausch verschiedener Ohrbügel mit unterschiedlichem Design, welche lediglich im Bereich der Arretierung technisch gleichwertig sein müssen.

Weitere vorteilhafte Ausgestaltungen des längenverstellbaren Bügels sind Gegenstand der Unteransprüche 2-9.

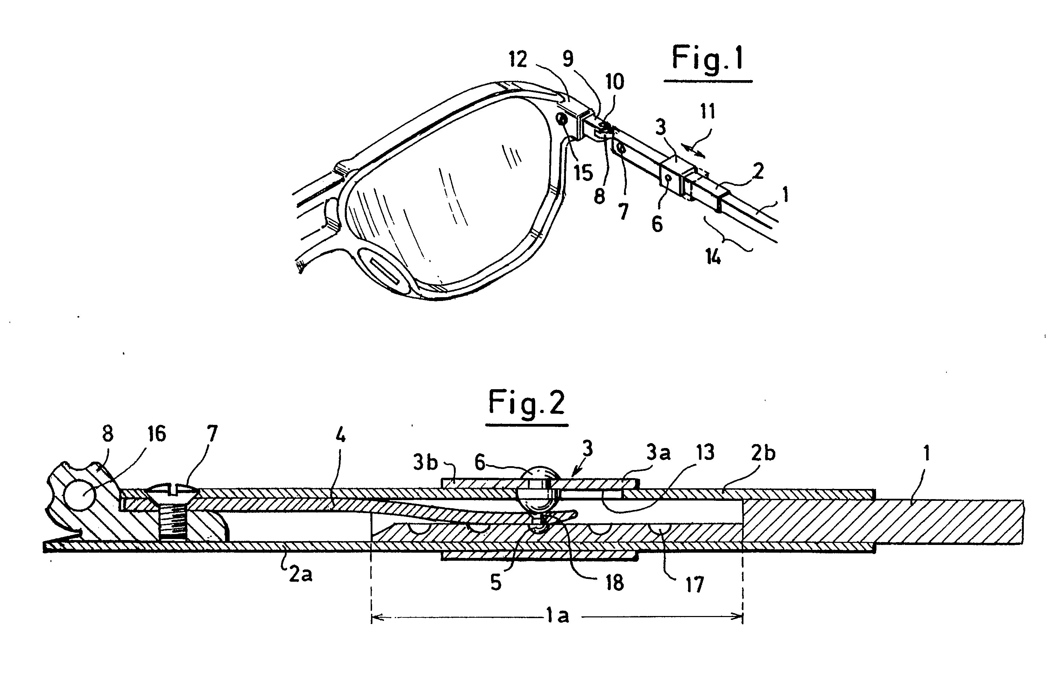

Die Neuerung wird im folgenden anhand eines in den figuren 1 und 2 der Zeichnungen dargestellten Ausführungsbeispiels näher erläutert.

Es zeigen

Figur 1      eine Teilansicht einer Brillenfassung mit angebrachtem, längenverstellbaren Brillenbügel;

Figur 2      eine Detailansicht eines Schnittes durch den Brillenbügels in dem für die Längenverstellung wesentlichen Bereich.

In Figur 1 ist ein an einer Brillenfassung (12) montierter, längenverstellbarer Brillenbügel (14) gemäß der Neuerung dargestellt. Die Augenränder und der Nasensteg der Brillenfassung (12) bestehen beispielsweise aus Kunststoff. Im temporalen Bereich jedes Augenrandes ist ein metallischer Scharnierblock (9) an seiner rückseitigen metallischen Verlängerung mit quadratischem Querschnitt in einer Öffnung einer Verdickung der Augenränder eingelassen und mit einer Schraube (15) lösbar befestigt. Die Gelenkscheibe (8) des Brillenbügels (14) greift in die beiden äußeren Scharniergabeln des Scharnierblocks (9) und wird dort mit einer Schraube (10) durch ihre innere Öffnung (16) festgehalten.

Der vorzugsweise metallische Brillenbügel (14) besteht im wesentlichen aus zwei Teilen (1, 2). Ein Bügelteil (2) ist als metallische Hülse (Führungsrohr) ausgebildet, in dessen freie Öffnung das andere Bügelteil (1) gleitend eingeführt wird. Die freie Öffnung der metallischen Hülse des Bügelteils (2) besitzt vorteilhafterweise eine rechteckige Form und ist nur wenig größer als der zweite Bügelteil (1) mit einem dann rechteckigen Querschnitt. Auf der der freien Öffnung des Bügelteils (2) entgegengesetzten Seite ist dieses über die Gelenkscheibe (8) an dem Scharnierblock (9) der Brillenfassung (12) befestigt.

Um das hülsenförmige Bügelteil (2) herum ist ein hülsenförmiger Arretierungsschieber (3) angebracht, welcher entlang der Bügelachse eine Verschiebung (11) ausführen kann. Der Arretierungsschieber (3) besitzt einen von außen sichtbaren Druckkörper (6), der im Inneren des hülsenförmigen Bügelteils (2) für eine Festlegung der beiden Bügelteile (1, 2) zueinander sorgt. Die Funktionsweise der Längenverstellung wird im folgenden anhand der Figur 2 erläutert.

In Figur 2 ist der vordere Teil des Brillenbügels (14) im Schnitt zu sehen. In das metallische, hülsenförmige Bügelteil (2) ragt das Federelement (4) hinein, das mit der Gelenkscheibe (8) durch eine Schraube (7) fest mit dem Bügelteil (2) verschraubt ist. Im auslaufenden Bereich des Federelementes (4) befindet sich ein Rastkörper (5). Das Federelement (4) hat in ihrem Verlauf eine Orientierung leicht nach unten und ist an ihrem Ende abgerundet. Damit das Federelement (4) das Hineinschieben des anderen Bügelteils (1) nicht behindert und im gesicherten Zustand eine Arretierung gegeben ist, ist das Ende leicht nach oben geneigt. Befindet sich der Arretierungsschieber (3) in seiner rechten, entsicherten Position, so kann der im Querschnitt verringerte Fortsatz (1a) des einzuschiebenden Bügelteils (1), welcher dünner ist als der Bügelteil (1) und ein abgeschrägtes Ende besitz, leicht zwischen das Federelement (4) und eine Seite (2a) des hülsenförmigen Bügelteils (2) geschoben werden. In dem Fortsatz (1a) des einzuschiebenden Bügelteils (1) befinden sich mehrere halbkreisförmige Rasterausnehmungen (17) deren Form der Oberfläche des Rastkörpers (5) in dem Federelement (4) an der Gewindescheibe (8) entspricht.

Obwohl das Blattfederelement (4) in ihrem Verlauf leicht nach unten gebogen ist und dadurch den an dem Federelement (4) angebrachten Rastkörper (5) Einrasterungen in die Rasterausnehmungen (17) des Fortsatzes (1a) des einzuschiebenden Bügelteils (1) ermöglicht, kann man den Fortsatz (1a) des einzuschiebenden Bügelteils (1) leicht zwischen dem Federelement (4) und der äußeren Seite (2a) des hülsenförmigen Bügelteils (2) bewegen, da die einseitige Einspannung des Federelementes (4) durch die Schraube (7) möglichst weit entfernt von dem an dem Federelement (4) befestigten Rastkörper (5) zu einer sehr geringen Federhärte führt.

Auf der inneren, dem Gesicht zugewandten Seite (2b) des hülsenförmigen Bügelteils (2) hat dieses eine schlitzartige Öffnung (13). Durch diesen Schlitz (13) greift ein am Arretierungsschieber (3) befestigter Druckkörper (6) in das Innere des hülsenförmigen Bügelteils (2). Der Druckkörper (6) befindet sich in einem Loch des Arretierungsschiebers (3), in welchem sich der Druckkörper (6) verjüngt. Außerhalb des Loches im Arretierungsschieber (3) hat der Druckkörper (6) eine größere, rundliche Gestalt, so daß er fest im Arretierungsschieber (3) verankert ist. Die äußerere und innere Fläche des Druckkörpers (6) ist kugelförmig gestaltet. In dem in Figur 2 dargestellten, arretierten Zustand rastet der Druckkörper (6) in eine Öffnung (18) des Federelementes (4) ein und arretiert den Rastkörper (5) in der zugeordneten Rastausnehmung (17) und damit die Bügelteile (1, 2) gegeneinander.

Will man die Länge des Brillenbügels (14) verändern, so drückt man den Arretierungsschieber (3) in die der Gelenkscheibe (8) abgewandte Position. Dadurch geht der arretierende Druckkörper (6) über das nach oben geneigte Ende des Federelementes (4) in eine Position, in welcher er die leichte Beweglichkeit des Federelementes (4) nicht behindert. Die seitlichen Flächen (3a, 3b) des Arretierungsschiebers (3) um den Druckkörper (6) sind so groß, daß der Schlitz (13) im hülsenförmigen Bügelteil (2) in keiner Position des Arretierungsschiebers (3) sichtbar ist.

Der Teil des hülsenförmigen Brillenbügels (2) hinter der schlitzartigen Öffnung (13) bis zur Einschiebeöffnung für den einzuschiebenden Bügelteil (1) ist so lang, daß auch in der äußersten Raststellung der Fortsatz (1a) des einzuschiebenden Bügelteils (1) nicht sichtbar wird.

Das einzuschiebende Bügelteil (1) kann leicht gegen ein anderes einzuschiebendes Bügelteil ausgetauscht werden. Dazu zieht man lediglich das einzuschiebende Bügelteil (1) ganz aus dem hülsenförmigen Bügelteil (2) heraus und führt dann das andere einzuschiebende Bügelteil in das hülsenförmige Bügelteil (2) ein. Dieser Austausch kann sehr schnell und ohne Werkzeug erfolgen, wodurch eine mit diesem längenverstellbaren Billenbügel ausgestattete Brille einfach mit anderen Ohrbügeln versehen werden kann. Lediglich im einzuschiebenden Bereich des einzuschiebenden Bügelteils (1) muß dieser technisch gleichwertig gestaltet sein, so daß Bügelteile (1) mit unterschiedlichem Desgin einfach, schnell und leicht an der Brille sicher befestigt werden können. Verzichtet man dabei auf die Längenverstellung des einzuschiebenden Bügelteils, so ist man in der Wahl des Designs für den einzuschiebenden Bügelteil in dessen sichtbaren Bereich vollkommen frei.

Die Gelenkscheibe (8) kann an dem hülsenförmigen Bügelteil (2) wie dargestellt befestigt sein. Sie kann aber auch am Ende des einzuschiebenden Bügelteils befestigt sein, wobei dann das freie Ende in das vom Ohr kommende, hülsenförmige Bügelteil geschoben wird.

## Ansprüche

1. Längenverstellbarer Brillenbügel, bestehend aus mindestens zwei Bügelteilen, von denen eines in einer Hülse axial verschiebbar und in verschiedenen Stellungen feststellbar ist, dadurch gekennzeichnet, daß ein erstes Bügelteil (2) mindestens in einem Abschnitt als Hülse ausgebildet ist, welche mit einem axial verlaufenden Schlitz (13) versehen ist und ein mit einem Rastkörper (5) versehenes Federelement (4) enthält, daß ein zweites Bügelteil (1) in das erste Bügelteil (2) einschiebbar ausgebildet ist und an seinem einschiebbaren Ende axial verteilte, zum federnden Einrasten des Rastkörpers (5) ausgebildete Rastausnehmungen trägt, und daß ein den Bereich des Schlitzes (13) im ersten Bügelteil (2) abdeckender, axial in zwei Positionen verstellbarer Arretierungsschieber (3) vorgesehen ist, der einen Druckkörper (6) trägt, welcher in einer Position den Rastkörper (5) in einer zugeordneten Rastausnehmung (17) arretiert und in der anderen diesen freigibt.

2. Längenverstellbarer Brillenbügel nach Anspruch 1, dadurch gekennzeichnet, daß das Federelement (4) im Bereich des Bügelscharniers (8, 9) mit dem ersten Bügelteil (2) verbunden ist.

3. Längenverstellbarer Brillenbügel nach Anspruch 1, dadurch gekennzeichnet, daß die Rastausnehmungen (17) des zweiten Bügelteils (1) halbkreisförmig sind.

4. Längenverstellbarer Brillenbügel nach Anspruch 1, dadurch gekennzeichnet, daß das in das erste Bügelteil (2) einschiebbare Teilstück (1a) des zweiten Bügelteils (1) im Querschnitt verringert und an seinem freien Ende keilförmig ausgebildet ist.

5. Längenverstellbarer Brillenbügel nach Anspruch 1, dadurch gekennzeichnet, daß die seitlichen Flächen (3a, 3b) des Arretierungsschiebers (3) den Schlitz (13) im hülsenförmigen Bügelteil (2) in jeder Position dieses Schiebers (3) abdecken.

6. Längenverstellbarer Brillenbügel nach Anspruch 1, dadurch gekennzeichnet, daß der Druckkörper (6) im Arretierungs-schieber (3) eine kugelförmige Gestalt hat.

7. Längenverstellbarer Brillenbügel nach einem der Ansprüche 1 oder 2, dadurch gekennzeichnet, daß im hülsenförmigen Bügelteil (2) die Gelenkscheibe (8) angebracht ist, an welchem das Federelement (4) befestigt ist.

Fig.1

Fig.2